# EUROPÄISCHE PATENTSCHRIFT

(11) **EP 1 401 846 B1**
(45) Veröffentlichungstag und Bekanntmachung des Hinweises auf die Patenterteilung: **15.12.2004**
(21) Anmeldenummer: 02754734.8
(22) Anmeldetag: 21.06.2002
(51) Int. Cl.: C07F 9/38

(54) **VERFAHREN ZUR GEWINNUNG VON N-PHOSPHONOMETHYLGLYCIN**
METHOD FOR PRODUCING N-PHOSPHONOMETHYLGLYCINE
PROCEDE POUR LA PRODUCTION DE N-PHOSPHONOMETHYLGLYCINE

(30) Priorität: 22.06.2001 DE 10130136
(43) Veröffentlichungstag der Anmeldung: 31.03.2004
(73) Patentinhaber: BASF AKTIENGESELLSCHAFT, 67056 Ludwigshafen (DE)
(72) Erfinder: VANDENMERSCH, Hugues, 67157 Wachenheim (DE); VOSS , Hartwig, 67227 Frankenthal (DE); ORSTEN, Stefan, 67158 Ellerstadt (DE); WULFF, Christian, 67133 Maxdorf (DE)
(74) Vertreter: Reitstötter - Kinzebach
(86) Internationale Anmeldenummer: PCT/EP2002/006903
(87) Internationale Veröffentlichungsnummer: WO 2003/000704

(56) Entgegenhaltungen:
- EP-A- 0 806 428
- WO-A-01/47938
- WO-A-01/79214
- WO-A-96/33005
- DE-A- 2 528 633
- DE-A- 3 025 657
- IT-B- 1 281 094
- JARON A W ET AL: "Preparation of N-phosphomethylglycine" CHEMICAL ABSTRACTS, AMERICAN CHEMICAL SOCIETY, COLUMBUS, US, Bd. 11, Nr. 122, 13. März 1995 (1995-03-13), XP002015122 ISSN: 0009-2258 -& PL 159 424 B (INSTYTUT PRZEMYSLU PRGANICZNEGO) 31. Dezember 1992 (1992-12-31)

## Beschreibung

Die vorliegende Erfindung betrifft ein Verfahren zur Gewinnung von N-Phosphonomethylglycin aus einem Gemisch, das N-Phosphonomethylglycin, Chloridsalze und gegebenenfalls organische Verunreinigungen enthält.

N-Phosphonomethylglycin (Glyphosate) ist ein in großem Umfang eingesetztes Totalherbizid. Zahlreiche Verfahren zur Herstellung von Phosphonomethylglycin sind bekannt. Bei einem der gängigsten Verfahren besteht die letzte Stufe darin, Phosphonomethyliminodiessigsäure oder ein Salz davon katalytisch mit Luft, Sauerstoff oder Wasserstoffperoxid zu oxidieren. Die Oxidation erfolgt im allgemeinen in wäßrigem Medium unter Verwendung von Kohle, Molybdän- oder Vanadiumsalzen, Platin, Rhodium oder Palladium etc. als Katalysatoren. Dabei bilden sich neben N-Phosphonomethylglycin Kohlendioxid und Formaldehyd. Ein derartiges Verfahren ist in der US 3,950,402 und US 3,969,398 beschrieben.

Sowohl das Reaktionsgemisch als auch die Mutterlauge, die nach Gewinnung des N-Phosphonomethylglycins aus dem Reaktionsgemisch durch Kristallisation anfällt, enthalten somit den bekanntlich kanzerogenen Formaldehyd. In der IT 1281094 wird daher vorgeschlagen, den Formaldehyd mit Hilfe eines Trennverfahrens unter Verwendung einer selektiven Membran mit einer Porengröße im Bereich von 10 bis 1.000 nm zu entfernen. Der Formaldehyd wird dabei über das Permeat abgetrennt.

Die WO 00/47938 beschreibt ein Verfahren zur Herstellung von N-Phosphonomethylglycin, wobei man ein Hexahydrotriazinderivat der Formel IIa 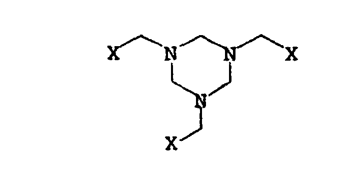 worin X insbesondere für CN steht, mit einem Triacylphosphit der Formel P(OCOR³)₃, worin R³ insbesondere für Phenyl steht, umsetzt und das erhaltene Produkt hydrolysiert. Das N-Phosphonomethylglycin wird aus dem Reaktionsgemisch durch Kristallisation bei pH 0,5 bis 2 gewonnen. Die Mutterlauge besitzt eine völlig andere Zusammensetzung als die bei der Oxidation von Phosphonomethyliminodiessigsäure anfallende Mutterlauge. Sie enthält noch erhebliche Mengen N-Phosphonomethylglycin, geringe Mengen an Aminomethylphosphonsäure, Glycin und Bis(phosphonomethyl)glycin sowie große Mengen an Chloridsalzen. Es wäre wünschenswert, die Verluste an Wertstoff und die Belastung des Abwassers zu minimieren.

Der vorliegenden Erfindung liegt daher die Aufgabe zugrunde, ein wirtschaftliches Verfahren zur Gewinnung von N-Phosphonomethylglycin aus einem wäßrigen Gemisch zur Verfügung zu stellen, das N-Phosphonomethylglycin, Ammoniumsalze, Alkali- oder Erdalkalimetallsalze und gegebenenfalls organische Verunreinigungen gelöst enthält. Dabei soll das Verfahren eine möglichst vollständige Gewinnung des N-Phosphonomethylglycins und eine möglichst vollständige Rückgewinnung des in den Ammoniumsalzen enthaltenen Ammoniaks ermöglichen.

Überraschenderweise wurde nun gefunden, daß diese Aufgabe gelöst wird, wenn das genannte wäßrige Gemisch einer Auftrennung in einem druckgetriebenen Trennverfahren unter Verwendung einer selektiven Nanofiltrationsmembran unterworfen wird.

Die vorliegende Erfindung betrifft daher ein Verfahren zur Gewinnung von N-Phosphonomethylglycin aus einem wäßrigen Gemisch, das N-Phosphonomethylglycin, Ammoniumhalogenide, Alkali- oder Erdalkalimetallhalogenide und gegebenenfalls organische Verunreinigungen gelöst enthält, wobei man
a) den pH des Gemisches auf einen Wert im Bereich von 2 bis 8 einstellt,
b) eine Auftrennung des Gemisches an einer selektiven Nanofiltrationsmembran vornimmt, wobei man ein mit N-Phosphonomethylglycin angereichertes und an Halogeniden abgereichertes Retentat und ein an den Halogeniden angereichertes und an N-Phosphonomethylglycin abgereichertes Permeat erhält und
c) N-Phosphonomethylglycin gewünschtenfalls aus dem Retentat gewinnt.

Es zeigen:
- Figur 1: eine schematische Darstellung von Schritt b des erfindungsgemäßen Verfahrens in kontinuierlicher Fahrweise
- Figur 2: eine schematische Darstellung von Schritt b des erfindungsgemäßen Verfahrens in diskontinuierlicher Fahrweise
- Figur 3: eine schematische Darstellung von Schritt b des erfindungsgemäßen Verfahrens wie in Figur 1 beschrieben mit anschließender Diafiltration
- Figur 4: eine schematische Darstellung von Schritt b des erfindungsgemäßen Verfahrens in der Durchführung als Diafiltration
- Figur 5: eine schematische Darstellung von Schritt b des erfindungsgemäßen Verfahrens in dreistufiger Ausführung.

N-Phosphonomethylglycin kann in Abhängigkeit vom pH-wert in unterschiedlicher ionischer Form vorliegen. Alle diese Formen sind erfindungsgemäß umfaßt.

Bei dem als Ausgangsmaterial zur Anwendung kommenden Gemisch handelt es sich um ein wäßriges Gemisch. Es kann gegebenenfalls einen geringen Anteil, insbesondere bis zu 10 Gew.-%, eines mit Wasser mischbaren Lösungsmittels enthalten, beispielsweise einen Mono- oder Polyalkohol, wie Methanol, Ethanol, Isopropanol, Glykol, 1,2- oder 1,3-Propandiol etc., Aceton, Dioxan oder Tetrahydrofuran.

Das Gemisch enhält, bezogen auf das Gewicht von N-Phosphonomethylglycin, einen Überschuß an Ammoniumhalogeniden und Alkali- oder Erdalkalihalogeniden. Unter Ammoniumhalogeniden sind neben NH₄Hal auch Ammoniumhalogenide zu verstehen, die mit 1 bis 3 C₁-C₄-Alkyl- oder Benzylgruppen substituiert sind, z.B. Methyl-, Dimethyl-, Trimethyl-, Tributyl- oder Benzylammoniumhalogenid. Bevorzugte Alkali- oder Erdalkalihalogenide sind Natrium-, Kalium- oder Calciumhalogenide. Als Halogenide sind Chloride bevorzugt. Die Menge an Halogeniden beträgt im allgemeinen mindestens 8 Gew.-%, insbesondere mindestens 10 Gew.-% und besonders bevorzugt mindestens 12 Gew.-%, bezogen auf das Gesamtgewicht des Gemisches. Die Menge an N-Phosphonomethylglycin beträgt im allgemeinen weniger als 4 Gew.-% und insbesondere weniger als 3 Gew.-%. Vorzugsweise liegt sie im Bereich von 0,5 bis 3,0 Gew.-%.

Gemäß einer bevorzugten Ausführungsform stammt das Gemisch aus der Herstellung von N-Phosphonomethylglycin, bei der man ein Hexahydrotriazinderivat der Formel II 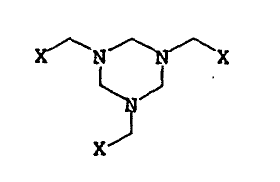 worin X für CN oder CONR¹R² steht, wobei R¹ und R² gleich oder verschieden sein können und für H oder C₁-C₄-Alkyl stehen, mit einem Triacylphosphit der Formel III

P(OCOR³)₃

worin die Reste R³, die gleich oder verschieden sein können, für C₁-C₁₈-Alkyl oder Aryl, das gegebenenfalls substituiert ist durch C₁-C₄-Alkyl, NO₂ oder OC₁-C₄-Alkyl, stehen, umsetzt und das erhaltene Produkt hydrolysiert. Die Umsetzung kann mit oder ohne Lösungsmittel durchgeführt werden. Vorzugsweise verwendet man ein inertes organisches Lösungsmittel, insbesondere einen halogenierten Kohlenwasserstoff, wie 1,2-Dichlorethan. Die Reaktionspartner werden zweckmäßigerweise in im wesentlichen stöchiometrischen Mengen eingesetzt. Die Reaktionstemperatur liegt im allgemeinen im Bereich von -10°C bis 140°C.

Anschließend erfolgt eine saure Hydrolyse, wobei insbesondere eine Halogenwasserstoffsäure, wie Salzsäure, verwendet wird. Bei Verwendung von Salzsäure ist in dem für das erfindungsgemäße Verfahren als Ausgangsmaterial verwendeten wäßrigen Gemisch dann ein Ammoniumchlorid enthalten.

Die Säure wird im allgemeinen im Überschuß eingesetzt, insbesondere in einer Menge von mindestens 2 Äquivalenten. Die Temperatur, bei welcher die Hydrolyse durchgeführt wird, liegt im allgemeinen im Bereich von etwa 10 bis 180°C.

Das bei der Hydrolyse unter Verwendung eines Überschusses an Säure erhaltene Phosphonomethylglycin ist in der wäßrigen Phase gelöst. Die bei der Hydrolyse entstandene Carbonsäure R³COOH fällt im allgemeinen aus und wird in üblicher Weise abgetrennt.

Das Phosphonomethylglycin kann durch Einstellen der wäßrigen Phase auf einen pH-Wert im Bereich von 0,5 bis 2,0 ausgefällt und in üblicher weise gewonnen werden. Die Einstellung des pH-Wertes erfolgt durch Zugabe eines Alkali- oder Erdalkalimetallhydroxids, insbesondere durch Zugabe von NaOH oder KOH.

Das nach der Gewinnung des Phosphonomethylglycins verbleibende Gemisch wird als Ausgangsmaterial für das erfindungsgemäße Verfahren eingesetzt. Falls es ein organisches Lösungsmittel enthält, wird dieses destillativ aus dem Gemisch im wesentlichen entfernt. Das Gemisch ist eine wäßrige Lösung mit im wesentlichen folgender Zusammensetzung (jeweils auf das Gesamtgewicht des Gemisches bezogen):
N-Phosphonomethylglycin 0,5 bis 3 Gew.-%
   insbesondere 0,5 bis 2,5 Gew.-%
Aminomethylphosphonsäure 0,01 bis 0,5 Gew.-%
Glycin 0,1 bis 0,4 Gew.-%
Bis(phosphonomethyl)glycin 0,2 bis 0,8 Gew.-%
Ammoniumhalogenide/Alkali- oder Erdalkalimetallhalogenide 10 bis 25 Gew.-%, insbesondere 12 bis 20 Gew.-%.

Das Verfahren zur Herstellung von N-Phosphonomethylglycin über das Hexahydrotriazin der Formel II ist detailliert in der PCT/ EP 00/13162 beschrieben. Der Inhalt dieser Anmeldung wird durch Bezugnahme auch in die vorliegende Anmeldung aufgenommen.

In Schritt (a) des erfindungsgemäßen Verfahrens wird das wäßrige Gemisch auf einen pH-Wert im Bereich von 2 bis 8, insbesondere 2,5 bis 6,5 und besonders bevorzugt auf etwa 4 bis 5 eingestellt. Dies erfolgt mit einer geeigneten Säure oder Base, wie Salzsäure, Schwefelsäure, Phosphorsäure, Natriumhydroxid oder Kaliumhydroxid.

In Schritt (b) des erfindungsgemäßen Verfahrens wird das Gemisch dann einer Auftrennung an einer selektiven Nanofiltrationsmembran unterzogen. Bei der Nanofiltration handelt es sich, wie bei der Ultrafiltration und der Umkehrosmose, um ein druckgetriebenes Membrantrennverfahren unter Anwendung eines positiven osmotischen Druckes auf einer Seite der Membran, der über dem osmotischen Druck der zu behandelnden Lösung liegt (wobei der osmotische Druck insbesondere durch das Retentionsverhalten der Membran bestimmt wird). Nanofiltrationsmembranen werden im allgemeinen aus mechanischen Gründen auf einer ein- oder mehrschichtigen Unterstruktur als Träger aus dem gleichen oder unterschiedlichen Material wie die Membran aufgebracht. Die Trennschichten können aus organischen Polymeren, Keramik, Metall oder Kohlenstoff bestehen. Häufig werden Membranen aus vernetzten aromatischen Polyamiden verwendet. Erfindungsgemäß bevorzugte Membranen weisen anionische Gruppen, beispielsweise Sulfonsäuregruppen, auf und zeigen daher eine negative Ladung. Geeignete Nanofiltrationsmembranen sind dem Fachmann bekannt und im Handel erhältlich. Beispiele sind die Desal-5-Membranen der Desalination Systems, Escondido, USA, die NF-Membranen der Filmtec Corp., Minneapolis, USA (z.B. NF 70, NF 50, NF 40 und NF 40HF), SU 600-Membran der Toray, Japan, und die NTR-Membranen der Nitto Electric, Japan (z.B. NTR 7450- und NTR 7250-Membranen), vgl. WO 96/33005.

Erfindungsgemäß bevorzugte Membranen weisen Trenngrenzen zwischen 50 bis 1.000 D, vorzugsweise 100 bis 500 D, auf.

Die Nanofiltrationsmembranen werden in der Praxis in sogenannte Membranmodule (Membraneinheiten) eingebaut. Dabei kommen alle Modulgeometrien in Betracht, die unter den Temperatur- und Druckbedingungen des erfindungsgemäßen Verfahrens mechanisch beständig sind. Geeignet sind beispielsweise Flach-, Rohr-, Multikanalelement-, Kapillar- oder Wickelgeometrie. Entsprechende Ausgestaltungen werden im Handel angeboten.

Die Temperatur, bei welcher Schritt (b) durchgeführt wird, ist nicht kritisch. Im allgemeinen wählt man die Temperatur so, daß eine Beschädigung der Membran vermieden wird. Bei Polymermembranen arbeitet man deshalb zweckmäßigerweise bei einer Temperatur von weniger als 50°C. Keramik- oder Metallmembranen können jedoch auch bei höherer Temperatur eingesetzt werden.

Schritt (b) ist ein druckgetriebenes Trennverfahren. Die treibende Kraft für die Auftrennung ist somit eine Druckdifferenz über die Membran, die größer als der osmotische Druck des eingesetzten Gemisches sein muß. Zweckmäßigerweise arbeitet man bei einem Transmembrandruck zwischen Retentatseite und Permeatseite von 30 bis 100 bar.

Zur Vermeidung von Konzentrationspolarisationen auf der Feedseite der Membran und Abscheidung von auskristallisierbaren Komponenten wird die Feedlösung im allgemeinen im Querstrom (cross flow) über die Membran geführt. Das Retentat wird dabei zumindest teilweise recycliert. Vorzugsweise arbeitet man bei einer Überströmungsgeschwindigkeit der Feedlösung im Bereich von 0,1 bis 5 m/s. Die Überströmungsgeschwindigkeit richtet sich nach der Modulgeometrie und kann vom Fachmann in einfacher Weise ermittelt werden.

Schritt (b) führt zu einer Auftrennung des eingesetzten Gemisches in ein Retentat, das im Vergleich zur Feedlösung mit N-Phosphonomethylglycin angereichert ist, und in ein Permeat, das mit dem Ammoniumhalogenid, Alkali- oder Erdalkalihalogenid angereichert ist, Überraschenderweise ist es somit möglich, N-Phosphonomethylglycin und die erwähnten Halogenide aufzutrennen, obwohl der Molekulargewichtsunterschied der aufzutrennenden Komponenten nicht sehr hoch ist und das N-Phosphonomethylglycin nicht quantitativ in Salzform vorliegt.

Schritt (b) des erfindungsgemäßen Verfahrens kann je nach dem gewünschten Rückgewinnungsgrad an N-Phosphonomethylglycin und je nach gewünschtem Abreicherungsgrad der Halogenide in unterschiedlichen Ausführungsformen realisiert werden. So kann Schritt (b) als reine Aufkonzentrationsstufe durchgeführt werden, bei der man das an N-Phosphonomethylglycin angereicherte Retentat und das an Halogeniden angereicherte Permeat erhält. Dabei ist der Abreicherungsgrad der Halogenide auf der Retentatseite der Membran durch den osmotischen Druck begrenzt.

Falls eine weitergehende Abreicherung der Halogenide im Retentat erwünscht ist, schließt man an die Aufkonzentrationsstufe mindestens eine Diafiltrationsstufe an. Zu diesem Zweck wird dem Retentat der Aufkonzentrationsstufe gleich viel Wasser zugeführt wie Permeat abgetrennt wurde. Das verdünnte Retentat wird dann der Diafiltrationsstufe zugeführt, die unter den gleichen Bedingungen und mit der gleichen Membran wie oben beschrieben durchgeführt wird. Man erhält auf diese Weise ein an Halogeniden abgereichertes Retentat, das gewünschtenfalls in einem weiteren Schritt aufkonzentriert werden kann, beispielsweise durch Abdestillation des Wassers.

Um eine hohe Abreicherung an Halogeniden zu erhalten, kann man Schritt (b) auch als reine Diafiltrationsstufe durchführen. Dabei wird die aus Stufe (a) erhaltene Lösung wie oben beschrieben aufgetrennt, wobei jedoch gleich viel Wasser in das Retentat zugeführt wird, wie als Permeat abgetrennt wird. Man erhält ein Retentat, das zur Gewinnung von N-Phosphonomethylglycin aufkonzentriert wird, beispielsweise durch Entfernen des Wassers mittels Destillation oder Umkehrosmose.

Sowohl die reine Aufkonzentration, als auch die Aufkonzentration mit anschießender Diafiltraton und die reine Diafiltration können einstufig oder mehrstufig durchgeführt werden. Bei mehrstufiger Fahrweise wird das Permeat der vorangehenden Stufe einer nachgeschalteten Stufe zugeführt und das Retentat der nachgeschalteten Stufe wird in die Feedlösung der vorangehenden Stufe eingespeist. Dabei können die einzelnen Stufen mit der gleichen Membran oder mit verschiedenen Membranen ausgerüstet sein. Mit der mehrstufigen Fahrweise wird eine bessere Rückhaltung von N-Phosphonomethylglycin oder den Salzen davon erreicht.

Das nach Schritt (b) erhaltene Retentat kann als solches weiterverwendet werden. Je nach Konzentration und Reinheit kann es einer Aufkonzentration oder Reinigung unterzogen oder entsorgt werden. Im Allgemeinen wird das Retentat jedoch gemäß Schritt (c) zur Gewinnung des darin enthaltenen N-Phosphonomethylglycins weiterbehandelt.

Schritt (b) des erfindungsgemäßen Verfahrens wird nachfolgend anhand der Figuren erläutert:

Zur kontinuierlichen Auftrennung des Gemisches wird die Feedlösung F über eine Leitung 1 einer Membraneinheit M mit einem Gehäuse 2, in dem sich eine Membran 3 befindet, in Querstromfahrweise zugeführt. Die Feedlösung F überströmt die Membran 3, wobei das Retentat R über Leitung 4 abgenommen wird. Gewünschtenfalls wird ein Teil des Retentats R über Leitung 5 zurückgeführt. Das Permeat P wird über Leitung 6 abgenommen.

Figur 2 zeigt die diskontinuierliche Auftrennung einer Feedlösung F, die über Leitung 1 einem Kreislaufbehälter 7 zugeführt wird. Der ursprüngliche Flüssigkeitsstand ist durch 8 angegeben. Die Feedlösung F wird über Leitung 9 der in Figur 1 beschriebenen Membraneinheit M in Querstromfahrweise zugeführt. An der Membran 3 erfolgt eine Auftrennung in ein Retentat, das über Leitung 4 in den Kreislaufbehälter 7 zurückgeführt wird, und ein Permeat P, das über Leitung 6 abgenommen wird. Auf diese Weise kommt es zur Aufkonzentration der Feedlösung F, die schließlich als Retentat R über Leitung 10 abgenommen wird. Der nach der Aufkonzentration vorliegende Flüssigkeitsspiegel ist durch 11 angegeben.

Figur 3 zeigt die Auftrennung eines Gemisches in einer Aufkonzentrationsstufeaus einer Membraneinheit M1 und einer anschließenden Diafiltrationsstufe aus einer Membraneinheit M2. Die Aufkonzentrationsstufe wird wie oben im Zusammenhang mit Figur 1 beschrieben betrieben, wobei über Leitung 6 ein Permeat P1 abgenommen wird. Das Retentat wird über Leitung 4 abgenommen, mit Wasser verdünnt und der Diafiltrationsstufe M2 aus dem Membranmodul 12 mit Membran 13 zugeführt. Diese wird ebenfalls wie oben bei Figur 1 beschrieben betrieben. Man erhält schließlich eine Auftrennung in ein Retentat R, das über Leitung 14 abgeführt wird, ein höher konzentriertes Permeat P1 und ein niedriger konzentriertes Permeat P2, das über Leitung 15 abgeführt wird.

In Figur 4 ist die Durchführung von Schritt (b) als reine Diafiltration erläutert. Die Feedlösung F wird nach Verdünnen mit Wasser über Leitung 1 der Membraneinheit M zugeführt und aufgetrennt wie oben im Zusammenhang mit Figur 1 beschrieben.

Figur 5 zeigt schematisch den verfahrensablauf eines dreistufigen Trennverfahrens. Es sind drei hintereinander geschaltete Membrantrenneinheiten M1, M2 und M3 vorgesehen, die mit einer Membran 3 ausgestattet sind. Die Zahl der Membraneinheiten kann beliebig erweitert werden.

Die Feedlösung F wird über Leitung 1 der ersten Membraneinheit M1 in Querstromfahrweise zugeführt. Es erfolgt eine Auftrennung in ein Retentat R1 und ein Permeat P1. Das Retentat R1 wird teilweise über Leitung 4 ausgeschleust und teilweise über Leitung 5 in die Feedlösung zurückgeführt. Das Permeat P1 wird über Leitung 6 der zweiten Membraneinheit M2 in Querstromfahrweise zugeführt. Es erfolgt eine Auftrennung in ein Retentat R2 und ein Permeat P2. Das Retentat R2 wird der Feedlösung F, die über Leitrung 1 in die Membraneinheit M1 eingespeist wird, zugeführt. Gewünschtenfalls wird ein Teil des Retentats R2 in die Feedlösung der Membraneinheit M2 zurückgeführt. Das Permeat P2 wird in die dritte Membraneinheit M3 in Querstromfahrweise eingespeist. Das bei der Auftrennung erhaltene Retentat R3 wird dem Feed der Membraneinheit M2 zugeführt. Gewünschtenfalls wird ein Teil des Retentats R3 in die Feedlösung der Membraneinheit M3 zurückgeführt. Das Permeat P3 wird ausgeschleust.

In Schritt (c) des erfindungsgemäßen Verfahrens erfolgt die Gewinnung des N-Phosphonomethylglycins aus dem in Stufe (b) erhaltenen Retentat. Zu diesem Zweck wird der pH-wert des Retentats auf 0,5 bis 2,0, insbesondere 0,8 bis 1,5 durch Zugabe einer Säure, beispielsweise Salzsäure oder Schwefelsäure, eingestellt. Gegebenenfalls wird das Retentat aufkonzentriert, beispielsweise durch Destillation oder Umkehrosmose. Es ist auch möglich, Fällungshilfsmittel zuzugeben, um das Phosphonomethylglycin möglichst vollständig auszufällen. Als Fällungshilfsmittel verwendet man vorzugsweise ein mit Wasser mischbares Lösungsittel, wie Methanol, Ethanol, Isopropanol, Aceton etc. Die Lösungsmittel können aus der Mutterlauge destillativ zurückgewonnen und wiederverwendet werden.

Das Phosphonomethylglycin fällt in kristalliner Form an. Es kann in üblicher Weise gewonnen werden, beispielsweise durch Filtration.

Das in Schritt (b) erhaltene Permeat kann entsorgt oder der weiteren Aufarbeitung zugeführt werden. Vorzugsweise wird es mit einer starken Base alkalisch gestellt, z.B. auf pH 13-14, um den Ammoniak bzw. das entsprechende Amin aus den im Permeat enthaltenen Ammoniumhalogeniden zurückzugewinnen. Geeignete Basen sind Alkali- oder Erdalkalimetallhydroxide, wie Natriumhydroxid, Kaliumhydroxid oder Calciumhydroxid. Der auf diese weise freigesetzte Ammoniak läßt sich z.B. durch Destillation oder Strippen mit einem inerten Gas, wie Luft oder Stickstoff, zurückgewinnen.

Das erfindungsgemäße Verfahren bzw. jede Stufe für sich genommen kann kontinuierich, diskontinuierlich oder als Semi-Batch-Verfahren durchgeführt werden.

Die Vorteile des erfindungsgemäßen Verfahrens liegen in der Aufkonzentrierung des N-Phosphonomethylglycins und damit in einer Ausbeuteerhöhung bei der Herstellung. Darüber hinaus wird eine Abtrennung der Pflanzenschutzkomponenten aus dem Abwasser erreicht. Schließlich erfolgt eine Abtrennung von den in dem Ausgangsgemisch enthaltenen Chloriden, was eine einfachere Rückgewinnung von Ammoniak aus den Ammoniumhalogeniden ermöglicht.

Die nachfolgenden Beispiele erläutern die Erfindung ohne sie zu begrenzen.

### Beispiel 1

In einem 2 1-Rührkolben mit Teflonblattrührer und Rückflußkühler werden 284 g Ammoniumbenzoat in 1000 ml 1,2-Dichlorethan vorgelegt und unter Stickstoffatmosphäre werden im Verlauf von 30 min 91,5 g Phosphortrichlorid zugetropft. Die Temperatur steigt dabei auf maximal 36°C. Anschließend wird noch 30 min bei 25 bis 36°C nachgerührt. Der Ansatz wird über eine Drucknutsche filtriert und der Filterkuchen wird unter Stickstoff noch zweimal mit je 500 g Dichlorethan nachgewaschen (2054 g Filtrat).

In einem 2 1-Rührkolben mit Teflonblattrührer und Rückflußkühler wird das Filtrat bei Raumtemperatur vorgelegt und das Hexahydrotriazin IIa (X = CN) (45,54 g) wird zugegeben. Unter Rühren wird in 30 min auf 80°C erhitzt und 30 min bei 80°C nachgerührt. Man läßt die Lösung erkalten und hydrolysiert direkt im Anschluß daran.

Dazu werden die Einsatzstoffe in einen Rohrreaktor (Volumen ca. 600 ml) mit vorgeschaltetem statischem Mischer bei 130°C und 8 bar dosiert (1265 g/h der Dichlorethan-Lösung aus der vorangegangenen Stufe, 207 g/h 20%ige HCl). Die Verweilzeit beträgt 30 min. Ein Vorlauf wird verworfen. Zur Weiterverarbeitung wird das erhaltene Zweiphasengemisch während 60 min aufgefangen. Die Phasen werden bei 60°C getrennt und die Wasserphase wird zweimal mit je 100 g Dichlorethan extrahiert.

In einem Rundkolben mit Teflonblattrührer wird zunächst das in der Wasserphase noch enthaltene Dichlorethan durch einstündiges Einleiten von Stickstoff bei 60°C gestrippt. Dann wird innerhalb von 15 min der pH-wert mit 50%iger Natronlauge bei 40 bis 60°C auf pH = 1,0 eingestellt. Man rührt die entstandene Suspension noch 3 h bei 40°C nach, läßt auf Raumtemperatur abkühlen, saugt das ausgefallene Produkt ab und wäscht anschließend mit 150 g Eiswasser nach. Der erhaltene Feststoff wird bei 70°C und 50 mbar während 16 h getrocknet.

Ausbeute: 54,6 g Phosphonomethylglycin (Reinheit 96,2% nach HPLC), entsprechend 80% Ausbeute, bezogen auf PCl₃.

Die Mutterlauge der Kristallisation hat folgende Zusammensetzung:

| | |
|---|---|
| 2,10 Gew.-% | N-Phosphonomethylglycin |
| 0,10 Gew.-% | Aminomethylphosphonsäure |
| 0,20 Gew.-% | Glycin |
| 0,45 Gew.-% | Bis(phosphonomethyl)glycin |
| 16,70 Gew.-% | NaCl/NH₄Cl |

Der pH-Wert der Mutterlauge wird anschließend mit 50 %iger NaOH auf 4 eingestellt. Die Mutterlauge wird dann diskontinuierlich in einer Rührdruckzelle aufkonzentriert. Die Rührdruckzelle ist mit einer Nanofiltrationsmembran des Typs Desal 5 DK der Firma Desal-Osmotics ausgerüstet. Die Nanofiltration erfolgt bei 40°C und 80 bar. Der mittlere spezifische Permeatfluß beträgt 5,29 kg/m²h. Es ergibt sich eine Rückhaltung von N-Phosphonomethylglycin von 99,22 % und eine Abreicherung an Chloridsalzen von 86,26 %. Die Ergebnisse sind in der nachfolgenden Tabelle 1 zusammengestellt.

**Tabelle 1**

| | Mutterlauge | Retentat | Permeat |
|---|---|---|---|
| Menge (g) | 1550 | 217 | 1333 |

| Konzentration | | | |
|---|---|---|---|
| N-Phosphonomethylglycin | 2,10 Gew.-% | 14,60 Gew.-% | 650 ppm |
| Aminomethylphosphonsäure | 0,10 Gew.-% | 0,70 Gew.-% | 23 ppm |
| Glycin | 0,20 Gew.-% | 0,30 Gew.-% | 0,18 Gew.-% |
| Bis(phosphonomethyl)glycin | 0,45 Gew.-% | 3,20 Gew.-% | 23 ppm |
| NaCl/NH₄Cl | 16,70 Gew.-% | 16,40 Gew.-% | 16,75 Gew.-% |

Zur Gewinnung des N-Phosphonomethylglycins gab man in einen 250 ml Rundkolben mit Teflonblattrührer 50,0 g des Retentats und 30,0 g Wasser. Innerhalb von 10 Minuten tropfte man dazu bei 40°C 14,24 g 20 %ige HCl bis ein pH-Wert von 1,3 erreicht war. Die entstandene Suspension wurde noch 3 Stunden bei 40°C nachgerührt und dann auf Raumtemperatur erkalten lassen. Das ausgefallene Phosphonomethylglycin wurde abgesaugt und mit 20 g Wasser nachgewaschen. Der Feststoff wurde bei 70°C und 50 mbar während 16 Stunden getrocknet.

Ausbeute: 4,10 g Feststoff (enthält 94,7 % Phosphonomethylglycin entsprechend einer Rückgewinnungsrate von 53 %)
Analyse: NaCl: 0,0 %
Phosphonomethylglycin,94,7 % (HPLC)
Mutterlauge: 106,8 g Lösung

### Beispiel 2

### Diskontinuierliche zweistufige Aufkonzentration der gemäß Beispiel 1 erhaltenen Mutterlauge

Der pH-Wert der Mutterlauge wurde wie in Beispiel 1 beschrieben auf 4 eingestellt. Die Mutterlauge wurde diskontinuierlich in einer Rührdruckzelle des in Beispiel 1 beschriebenen Typs mit der gleichen Membran aufkonzentriert. Die Bedingungen waren wie in Beispiel 1 beschrieben. Das Permeat wurde einer weiteren Rührdruckzelle des gleichen Typs mit der gleichen Membran zugeführt und aufkonzentriert. Die Aufkonzentrierung erfolgte bei 40°C und 40 bar. Der mittlere spezifische Permeatfluß in der zweiten Stufe beträgt 25,70 kg/m²h. Die über beide Nanofiltrationsstufen berechnete Rückhaltung von N-Phosphonomethylglycin liegt bei 99,99% und die Abreicherung an Chloridsalzen bei 77,82 %. Die Ergebnisse sind in der nachfolgenden Tabelle 2 zusammengestellt.

**Tabelle 2**

| | Mutterlauge | Retentat Stufe 1 | Retentat Stufe 2 | Permeat |
|---|---|---|---|---|
| Menge (g) | 1.550 | 217 | 133,3 | 1.199,7 |

| Konzentration | | | | |
|---|---|---|---|---|
| N-Phosphonomethylglycin | 2,10 Gew.-% | 14,60 Gew.-% | 6.320 ppm | 20 ppm |
| Aminomethylphosphonsäure | 0,10 Gew.-% | 0,70 Gew.-% | 230 ppm | - |
| Glycin | 0,20 Gew.-% | 0,30 Gew.-% | 9.630 ppm | 930 ppm |
| Bis(phosphonomethyl)glycin | 0,45 Gew.-% | 3,20 Gew.-% | 230 ppm | - |
| NaCl/NH₄Cl | 16,70 Gew.-% | 16,40 Gew.-% | 16,40 Gew.-% | 16,79 Gew.-% |

## Patentansprüche

1. Verfahren zur Gewinnung von N-Phosphonomethylglycin aus einem wäßrigen Gemisch, das N-Phosphonomethylglycin, Ammoniumhalogenide sowie Alkali- oder Erdalkalihalogenide und gegebenenfalls organische Verunreinigungen gelöst enthält, wobei man
(a) den pH-Wert des Gemisches auf einen Wert im Bereich von 2 bis 8 einstellt,
(b) eine Auftrennung des Gemisches an einer selektiven Nanofiltrationsmembran vornimmt, wobei man ein an N-Phosphonomethylglycin reicheres und an Halogeniden ärmeres Retentat und ein an Halogeniden reicheres und an N-Phosphonomethylglycin ärmeres Permeat erhält und
(c) das N-Phosphonomethylglycin aus dem Retentat gewinnt.

2. Verfahren nach Anspruch 1, wobei das Gemisch aus der Herstellung von N-Phosphonomethylglycin stammt, bei der man ein Triazin der Formel II 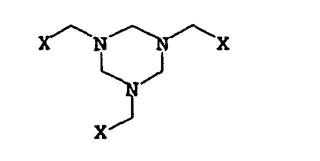 worin X für CN oder CONR¹R² steht, wobei R¹ und R² gleich oder verschieden sein können und für H oder C₁-C₄-Alkyl stehen,
mit einem Triacylphosphit der Formel III
P(OCOR³)₃
worin die Reste R³ für C₁-C₁₈-Alkyl oder Aryl, das gegebenenfalls substituiert ist durch C₁-C₄-Alkyl, NO₂ oder OC₁-C₄-Alkyl, stehen,
umsetzt, und das erhaltene Produkt mit einer Halogenwasserstoffsäure hydrolysiert.

3. Verfahren nach Anspruch 2, wobei man ein Gemisch verwendet, das als Mutterlauge erhalten wurde nach Umsetzung des Triazins der Formel II mit dem Triacylphosphit der Formel III, Hydrolyse des erhaltenen Produktes mit Salzsäure und Abtrennung des N-Phosphonomethylglycins bei pH 0,5 bis 2.

4. Verfahren nach Anspruch 3, wobei das Gemisch 0,5 bis 3 Gew.-% N-Phosphönomethylglycin und 10 bis 25 Gew.-% Chloridsalze enthält.

5. Verfahren nach einem der vorhergehenden Ansprüche, wobei man den pH des Gemisches auf einen Wert im Bereich von 2,5 bis 6,5 einstellt.

6. Verfahren nach einem der vorhergehenden Ansprüche, wobei man in Schritt (b) eine Membran mit einer Trenngrenze im Bereich von 50 bis 1.000 D verwendet.

7. Verfahren nach Anspruch 6, wobei man eine Membran mit einer Trenngrenze im Bereich von 100 bis 500 D verwendet.

8. Verfahren nach einem der vorhergehenden Ansprüche, wobei man die Auftrennung des Gemisches in Schritt (b) bei einem Transmembrandruck zwischen Retentatseite und Permeatseite im Bereich von 30 bis 100 bar durchführt.

9. Verfahren nach einem der vorhergehenden Ansprüche, wobei man die Auftrennung des Gemisches in Schritt (b) bei einer Überströmgeschwindigkeit im Bereich von 0,1 bis 5 m/s durchführt.

10. Verfahren nach einem der vorhergehenden Ansprüche, wobei man die Auftrennung in Schritt (b) mehrstufig durchführt, indem man das Permeat einer Stufe der nachfolgenden Stufe als Feedlösung zuführt.

11. Verfahren nach Anspruch 10, wobei man das Retentat der zweiten bzw. einer weiteren Stufe zumindest teilweise der ersten bzw. der vorhergehenden Stufe zuführt.

12. Verfahren nach einem der vorhergehenden Ansprüche, wobei man das in Stufe (b) erhaltene Retentat mindestens einem Diafiltrationsschritt unterwirft.

13. Verfahren nach einem der vorhergehenden Ansprüche, wobei man das Permeat mit einer starken Base behandelt, um den in den Ammoniumhalogeniden enthaltenen Ammoniak bzw. Amin freizusetzen.

## Claims

1. A process for the recovery of N-phosphonomethylglycine from an aqueous mixture which contains N-phosphonomethylglycine, ammonium halides, and alkali metal or alkaline earth metal halides with or without organic impurities in dissolved form, wherein
(a) the pH of the mixture is adjusted to a value in the range from 2 to 8,
(b) a separation of the mixture on a selective nanofiltration membrane is performed, a retentate which is richer in N-phosphonomethylglycine and poorer in halides and a permeate which is richer in halides and poorer in N-phosphonomethylglycine being obtained, and
(c) the N-phosphonomethylglycine is recovered from the retentate.

2. A process as claimed in claim 1, wherein the mixture originates from the preparation of N-phosphonomethylglycine, in which a triazine of the formula II 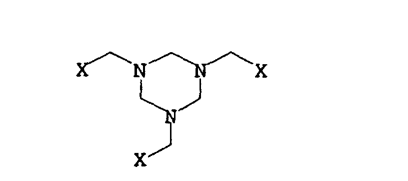 in which X is CN or CONR¹R², where R¹ and R² can be identical or different and are H or C₁-C₄-alkyl,
is reacted with a triacyl phosphite of the formula III
P(OCOR³)₃
in which the radicals R³ are C₁-C₁₈-alkyl or aryl which is optionally substituted by C₁-C₄-alkyl, NO₂ or OC₁-C₄-alkyl,
and the product obtained is hydrolyzed using a hydrohalic acid.

3. A process as claimed in claim 2, wherein a mixture is used which was obtained as a mother liquor after reaction of the triazine of the formula II with the triacyl phosphite of the formula III, hydrolysis of the product obtained using hydrochloric acid and separation of the N-phosphonomethylglycine at pH 0.5 to 2.

4. A process as claimed in claim 3, wherein the mixture contains 0.5 to 3% by weight of N-phosphonomethylglycine and 10 to 25% by weight of chloride salts.

5. A process as claimed in any of the preceding claims, wherein the pH of the mixture is adjusted to a value in the range from 2.5 to 6.5.

6. A process as claimed in any of the preceding claims, wherein a membrane having a separation limit in the range from 50 to 1000 D is used in step (b).

7. A process as claimed in claim 6, wherein a membrane having a separation limit in the range from 100 to 500 D is used.

8. A process as claimed in any of the preceding claims, wherein the separation of the mixture in step (b) is carried out at a transmembrane pressure between retentate side and permeate side in the range from 30 to 100 bar.

9. A process as claimed in any of the preceding claims, wherein the separation of the mixture in step (b) is carried out at a flowing-over rate in the range from 0.1 to 5 m/s.

10. A process as claimed in any of the preceding claims, wherein the separation in step (b) is carried out in a number of stages by feeding the permeate from one stage to the subsequent stage as a feed solution.

11. A process as claimed in claim 10, wherein the retentate of the second or a further stage is at least partially fed to the first or the preceding stage.

12. A process as claimed in any of the preceding claims, wherein the retentate obtained in stage (b) is subjected to at least one diafiltration step.

13. A process as claimed in any of the preceding claims, wherein the permeate is treated with a strong base in order to release the ammonia or amine contained in the ammonium halides.

## Revendications

1. Procédé pour la production de N-phosphonométhylglycine à partir d'un mélange aqueux qui contient en solution de la N-phosphonométhylglycine, des halogénures d'ammonium ainsi que des halogénures alcalins ou alcalino-terreux et, éventuellement, des contaminations organiques, dans lequel
(a) on règle le pH du mélange à une valeur de l'ordre de 2 à 8,
(b) on procède à une séparation du mélange sur une membrane sélective de nanofiltration, auquel cas on obtient un rétentat plus riche en N-phosphonométhylglycine et plus pauvre en halogénures et un perméat plus riche en halogénures et plus pauvre en N-phosphonométhylglycine et
(c) on produit la N-phosphonométhylglycine à partir du rétentat.

2. Procédé selon la revendication 1, où le mélange provient de la préparation de N-phosphonométhylglycine, dans lequel on met à réagir une triazine de formule II 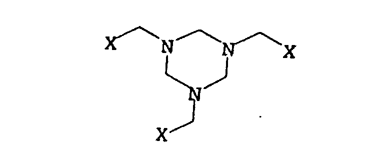 dans laquelle X désigne CN ou CONR¹R², R¹ et R² pouvant être identiques ou différents et désigner H ou un radical alkyle C₁-C₄,
avec un phosphite triacylique de formule III
P (OCOR³)₃
dans laquelle les radicaux R³ désignent un radical alkyle C₁-C₁₈ ou aryle qui est éventuellement substitué par un radical alkyle C₁-C₄, NO₂ ou O-alkyle C₁-C₄,
et le produit obtenu est hydrolysé avec un halogénure d'hydrogène.

3. Procédé selon la revendication 2, dans lequel on utilise un mélange qui a été obtenu comme lessive-mère après réaction de la triazine de formule II avec le phosphite triacylique de formule III, hydrolyse du produit obtenu avec de l'acide chlorhydrique et séparation de la N-phosphonométhylglycine à un pH de 0,5 à 2.

4. Procédé selon la revendication 3, dans lequel le mélange contient 0,5 à 3% en poids de N-phosphonométhylglycine et 10 à 25% en poids de sels de chlorure.

5. Procédé selon l'une des revendications précédentes, dans lequel on règle le pH du mélange à une valeur de l'ordre de 2,5 à 6,5.

6. Procédé selon l'une des revendications précédentes, dans lequel on utilise dans l'étape (b) une membrane avec une limite de séparation de l'ordre de 50 à 1.000 D.

7. Procédé selon la revendication 6, dans lequel on utilise une membrane avec une limite de séparation de l'ordre de 100 à 500 D.

8. Procédé selon l'une des revendications précédentes, dans lequel on procède à la séparation du mélange dans l'étape (b) à une pression transmembrane entre le côté rétentat et le côté perméat de l'ordre de 30 à 100 bars.

9. Procédé selon l'une des revendications précédentes, dans lequel on procède à la séparation du mélange dans l'étape (b) à une vitesse de passage de l'ordre de 0,1 à 5 m/s.

10. Procédé selon l'une des revendications précédentes, dans lequel on procède à la séparation en plusieurs étapes dans l'étape (b) en amenant le perméat d'une étape à l'étape suivante comme solution d'alimentation.

11. Procédé selon la revendication 10, dans lequel on amène, au moins partiellement, le rétentat de la deuxième étape ou d'une étape supplémentaire à la première étape ou à l'étape précédente.

12. Procédé selon l'une des revendications précédentes, dans lequel on soumet le rétentat obtenu dans l'étape (b) au moins à une étape de diafiltration.

13. Procédé selon l'une des revendications précédentes, dans lequel on traite le perméat avec une base forte pour libérer l'ammoniac ou l'amine contenus dans les halogénures d'ammonium.
